# EUROPÄISCHE PATENTSCHRIFT

(11) **EP 3 445 533 B1**
(45) Veröffentlichungstag und Bekanntmachung des Hinweises auf die Patenterteilung: **04.09.2024**
(21) Anmeldenummer: 17723018.2
(22) Anmeldetag: 13.04.2017
(51) Int. Cl.: B25J 9/00, B25J 9/10, B25J 13/08, B25J 17/02, F16F 15/023, F16F 15/027, F16F 15/08, F16F 1/38, F16F 1/48, F16F 9/12, F16F 13/08

(54) **ELASTISCHES UND STEUERBARES GELENK, ZUR VERWENDUNG IN KÖRPERNAHEN SYSTEMEN**
ELASTIC AND CONTROLLABLE ARTICULATION FOR USE IN BODY AREA SYSTEMS
ARTICULATION ÉLASTIQUE COMMANDABLE DESTINÉE À ÊTRE UTILISÉE DANS DES SYSTÈMES PRÈS DU CORPS

(30) Priorität: 20.04.2016 DE 102016004695
(43) Veröffentlichungstag der Anmeldung: 27.02.2019
(73) Patentinhaber: Helmut-Schmidt-Universität/ Universität der Bundeswehr Hamburg, 22043 Hamburg (DE)
(72) Erfinder: MÜLLER, Jens, 22589 Hamburg (DE); WEIDNER, Robert, 29581 Bohlsen (DE); SCHWEIM, Anne, 21527 Kollow (DE); SCHWEIM, Marie, 21527 Kollow (DE); GRUBE, Sarah, 21493 Grabau (DE)
(74) Vertreter: Maiwald GmbH
(86) Internationale Anmeldenummer: PCT/EP2017/058982
(87) Internationale Veröffentlichungsnummer: WO 2017/182389

(56) Entgegenhaltungen:
- DE-C- 307 250
- FR-A- 779 284
- US-A- 3 467 421
- US-A- 6 113 642
- US-A1- 2007 258 671

## Beschreibung

### Technisches Gebiet der Erfindung

Die Erfindung betrifft ein elastisches und steuerbares Gelenk, dass sich in körpernahe Systeme wie Exoskelette einsetzen lässt, um geometrisch und kinematisch komplexe menschliche Bewegungen wie das Beugen und das Strecken des Knies oder die rotatorische und translatorische Bewegung der Schulter ermöglicht. Eine Verwendung in technischen Systemen ist ebenfalls ein Ansatz für den Einsatz, und zwar überall da, wo die Gelenkbewegung komplex und dadurch schwer beschreibbar ist.

### Hintergrund der Erfindung

Exoskelette und Gelenke für Exoskelette sind aus dem Stand der Technik bekannt. Mit ihnen wird dem menschlichen Körper eine Last abgenommen, sodass der Körper geschont werden kann.

Aus DE 39 39 192 A1 ist eine Verbindung zwischen einem Zylinder und einer Fahrzeugkarosserie bekannt. Die Verbindung weist einen Zapfen und eine Öse des Zylinders auf. Der Zapfen ist hierbei gegenüber der Fahrzeugkarosserie elastisch gelagert, um Stöße abzufedern. Jedoch zeigt DE 39 39 192 A1 kein Gelenk im Sinne eines relativ freien rotatorischen Freiheitsgrades. Ferner befinden sie die beiden Komponenten in einem Abstand zu einander, sodass keine Kopplung zwischen zwei Gelenkelementen vorliegt. Auch durch das Spiel zwischen dem Verbindungsauge und dem Zylinderzapfen liegt hier kein Gelenk im eigentlichen Sinne vor.

Aus DE 198 59 931 A1 ist eine Beinprothese mit einem Kniegelenk mit einem festen Drehpunkt bekannt, welches über eine außenliegende Dämpfungseinrichtung verfügt. Diese Dämpfungseinrichtung kann mittels einer Regelvorrichtung aktiv geregelt werden, um den Kniewinkel und die Kraft auf das Kniegelenk anpassen zu können. Die Dämpfungseinrichtung ist jedoch außerhalb des Gelenks angeordnet und erlaubt keinen weiteren translatorischen Freiheitsgrad.

Aus FR 779 284 A ist ein elastisches Element bekannt, welches fest mit zwei Platten verbunden ist. Jedoch ist keine unterschiedliche Dämpfung in den verschiedenen Freiheitsgraden vorhanden.

Aus EP1364755B1 bzw. US2003/0223844A1 ist ein Exoskelett für einen Arm, insbesondere für Anwendung in der Raumfahrt beschrieben, um für Bewegungen der menschlichen Armgelenke Daten mit Hilfe von Messwertgebern zu erfassen und/oder Kraftmomente mit Hilfe von in den Gelenken angeordneten Aktivierungseinheiten aufzubringen. Hierdurch entsteht eine direkte, parallele Gelenkkette, d.h. die menschlichen Freiheitsgrade werden möglichst exakt durch das technische System nachgebaut, in diesem Fall durch ein System mit 16 Freiheitsgraden. Diese Gelenkkette ist mit dem Brustkorb des menschlichen Körpers über eine getragene Stützvorrichtung mit starren Platten verbunden und besitzt nicht nachgiebige Gelenke. Eine Steuerung erfolgt über flexible Bänder. Jedoch fehlt es einer Dämpfungseinrichtung in der Gelenkvorrichtung und an Freiheitgraden im Gelenk, insbesondere wird keine translatorische Bewegung in den Gelenken ermöglicht. Anstelle dessen werden eine Vielzahl von Gelenken vorgesehen, die diese Funktionalität abbilden sollen.

Aus US 3 199 903 A ist eine Vorrichtung bekannt, bei der zwischen einem Element und einer Achse mehrere Scheiben angeordnet sind. US 3 199 903 A zeigt jedoch weder eine Gelenkkapsel, noch einen Lagerkörper, noch eine Dämpfungseinrichtung

Aus EP1305175B1 ist eine elastisches Verbindung beschrieben, welche ausgelegt ist, sowohl mit Zug/Druck als auch mit Verdrehung zu arbeiten und insbesondere in einer Fahrzeugaufhängung verbaut werden kann.

Aus WO2011/127421A1 ist ein konfigurierbares Exoskelett mit einer Rumpfvorrichtung bekannt, welches mit Beinstützen in Höhe des Hüftgelenkes verbunden ist, welches eine Beugung und eine Streckung um die jeweilige Hüftachse ermöglichen soll.

Aus WO002014151065A2 ist ein Exoskelett mit steifen und flexiblen Elementen bekannt welches hauptsächlich über "twisted string" Aktuatoren zu einer Vergrößerung der nach außen gerichteten Körperkräfte, zur Erlangung höherer Reaktionskräfte als dem Träger des Systems innewohnen, führen soll. Exemplarisch werden hierbei flexible Zuggurtsysteme beispielsweise für die Achillessehne vorgestellt, die ihrerseits aber wiederrum an hartschaligen Aufnahmeträgern befestigt sind.

Viele der oben beschriebenen Anordnungen beinhalten Gelenke, die in der Regel starr gestaltet sind und die Aufgabe haben eine relative, rotatorische Bewegung zwischen zwei Elementen zu realisieren. Beispiele hierfür sind Türen im Haushalt und im Automobil oder Gelenke in sogenannten Exoskeletten. Bekannte Gelenke haben in der Regel einen Freiheitsgrad. Bekannte Exoskeletten besitzen rein technisch ausgelegte Gelenke, i.d.R. z.B. für das Knie- und Ellbogengelenk mit jeweils einem Freiheitsgrad und sind eher steif. Insbesondere für Exoskelette ist es jedoch Wünschenswert Gelenke einzusetzen, um auf der technischen Seite die menschliche Bewegung bspw. des Kniegelenks oder des Ellbogengelenks natürlicher nachzubilden.

Lagerungen mit mehreren, jedoch meist eingeschränkten Freiheitgraden sind Gummilager z.B. in Kraftfahrzeugen. Diese haben eine Lagerfunktion, jedoch keine Gelenkfunktion, und somit zu den Gelenken aus bekannten Exoskeletten einen geringeren Bewegungsfreiraum hinsichtlich translatorischer und rotatorischer Bewegungen aufweisen.

### Zusammenfassung der Erfindung

Die Erfindung betrifft eine Gelenkanordnung gemäß dem unabhängigen Anspruch 1. Weitere Ausgestaltungen sind in den abhängigen Ansprüchen angegeben.

Gemäß einer Ausführungsform der Erfindung wird eine Gelenkvorrichtung zur technischen Realisierung komplexer rotatorischer Bewegungen bereitgestellt, aufweisend ein erstes Gelenkelement, ein zweites Gelenkelement und eine Dämpfungseinrichtung, wobei das erste Gelenkelement und das zweite Gelenkelement eine gemeinsame Kopplung aufweisen, wobei die Kopplung wenigstens einen ersten rotatorischen Freiheitsgrad und einen translatorischen Freiheitsgrad aufweist, wobei die Dämpfungseinrichtung derart zwischen dem ersten Gelenkelement und dem zweiten Gelenkelement angeordnet ist, dass es den translatorischen Freiheitsgrad stärker dämpft als den rotatorischen Freiheitsgrad.

Auf diese Weise kann eine Gelenk bereitgestellt werden, welches neben dem rotatorischen Freiheitgrad des menschlichen Gelenkes auch einen translatorischen Freiheitsgrad abbildet, der sich beim menschlichen Gelenk aus der Charakteristik ergibt, dass sich dieses nicht um eine feste Drehachse dreht, sondern die Gelenkflächen aufeinander abrollen.

Gemäß der Erfindung weist das erste Gelenkelement eine Gelenkkapsel mit einer nach innen gerichteten Kopplungsfläche und das zweite Gelenkelement eine nach außen gerichtete Kopplungsfläche auf, wobei die nach außen gerichtete Kopplungsfläche des zweiten Kopplungselementes innerhalb der Gelenkkapsel des ersten Gelenkelementes liegt, wobei wenigstens ein Teil der Dämpfungseinrichtung zwischen der nach innen gerichteten Kopplungsfläche des ersten Gelenkelements und der nach außen gerichteten Kopplungsfläche des zweiten Gelenkelementes angeordnet ist.

Auf diese Weise kann eine konzentrische Anordnung gebildet werden, die insbesondere in Randbereichen der Bewegungsradien keine Inhomogenitäten aufweist. Vielmehr kann auf diese Weise bei Erreichen der Randbereiche der Bewegungsradien eine höhere Dämpfung eingestellt werden.

Gemäß einer Ausführungsform der Erfindung weist die Gelenkanordnung ferner einen Achskörper auf, wobei die Gelenkkapsel des ersten Gelenkelementes eine Achsbohrung aufweist, wobei die nach außen gerichtete Kopplungsfläche eine Achsdurchdringung aufweist, wobei sich der Achskörper durch die Achsbohrung der Gelenkkapsel des ersten Gelenkelementes und durch die Achsdurchdringung der nach außen gerichteten Kopplungsfläche des zweiten Gelenkelementes erstreckt, wobei wenigstens ein Teil der Dämpfungseinrichtung zwischen dem Achskörper und wenigstens einem von der Achsbohrung und der Achsdurchdringung angeordnet ist, wobei der Achskörper eine Rotationachse des ersten rotatorischen Freiheitsgrades bildet und der erste translatorische Freiheitsgrad im Wesentlichen orthogonal zu der Rotationsachse der ersten rotatorischen Freiheitgrades ist.

Auf diese Weise kann eine Stabilisierung der Gelenkanordnung erreicht werden.

Gemäß einer Ausführungsform der Erfindung weist das zweite Gelenkelement eine Gelenkkapsel mit einer die Achsdurchdringung fortsetzenden Achsbohrung auf, mit der nach außen gerichteten Kopplungsfläche des zweiten Gelenkelementes und einer nach innen gerichteten Kopplungsfläche, wobei sich der Achskörper durch die Achsbohrung der Gelenkkapsel des ersten Gelenkelementes und durch die Achsbohrung der Gelenkkapsel des zweiten Gelenkelementes erstreckt, wobei der Achskörper einen sich vom Achskörper weg erstreckenden Lagerkörper aufweist, wobei der Lagerkörper in der Gelenkkapsel des zweiten Gelenkelements angeordnet ist, wobei wenigstens ein Teil der Dämpfungseinrichtung zwischen der nach innen gerichteten Kopplungsfläche des zweiten Gelenkelementes und dem Lagerkörper angeordnet ist.

Auf diese Weise kann eine doppelt gekapselte konzentrische Gelenkkapselanordnung bereitgestellt werden, die zwischen den beiden Gelenkkapseln eine Dämpfungsanordnung hat, sodass eine natürliche Gelenkcharakteristik nachgebildet werden kann.

Gemäß einer Ausführungsform der Erfindung sind die Gelenkkapsel des ersten Gelenkelementes, die Gelenkkapsel des zweiten Gelenkelementes und der Lagerkörper konzentrisch zueinander angeordnet und durch die Dämpfungseinrichtung allseitig zueinander beabstandet, wobei die Dämpfungseinrichtung einen zweiten rotatorischen Freiheitsgrad und einen dritten rotatorischen Freiheitsgrad, sowie den ersten translatorischen Freiheitsgrad und einen zweiten translatorischen Freiheitsgrad und einen dritten translatorischen Freiheitsgrad dämpft.

Auf diese Weise kann eine anisotrope Dämpfung der unterschiedlichen Freiheitsgrade erreicht werden, die durch die Ausgestaltung der Dämpfungsanordnung je nach Anforderung und Vorgaben gestaltet werden kann.

Gemäß einer Ausführungsform der Erfindung weist die Gelenkanordnung eine Antriebseinheit auf, wobei die Antriebseinheit ausgelegt ist eine Rotationsbewegung des ersten Gelenkelementes in Bezug auf das zweite Gelenkelement entlang des ersten rotatorischen Freiheitgrades zu bewirken.

Auf diese Weise kann die Hauptbewegung motorisch unterstützt werden, sodass der Hauptermüdungsquelle entgegengewirkt werden kann.

Gemäß einer Ausführungsform der Erfindung ist der Achskörper eine Anordnung von in axialer Richtung seriell angeordneten Abschnitten unterschiedlicher Elastizität.

Auf diese Weise kann die Bewegungscharakteristik der Rotationsachse eines menschlichen Gelenkes exakter nachgebildet werden.

Gemäß einer Ausführungsform der Erfindung ist der Achskörper rohrförmig ausgestaltet und weist im Inneren ein draht- bzw. seilförmiges Element zur Anpassung der Steifigkeits- und Dämpfungseigenschaften auf.

Auf diese Weise kann die Starrheit bzw. Flexibilität der Bewegungsachse eingestellt werden und auch dynamisch verändert bzw. angepasst werden.

Gemäß einer Ausführungsform der Erfindung ist das draht- bzw. seilförmige Element als Formgedächtniselement ausgestaltet ist, um sich Ausgangspositionen zu merken und diese gesteuert bzw. positions- und belastungsgesteuert wieder einzunehmen.

Auf diese Weise kann ein Steuerungsaufwand, insbesondere beim Einnehmen eines ursprünglichen Zustandes vereinfacht werden.

Gemäß einer Ausführungsform der Erfindung weist die Dämpfungseinrichtung ein fluidisches, insbesondere ein Hydraulik- bzw. Pneumatik-Kammersystem auf.

Auf diese Weise kann die Dämpfung durch ein Pumpensystem gesteuert werden.

Gemäß einer Ausführungsform der Erfindung weist die Dämpfungseinrichtung ein elastisches Material zur Herstellung einer Dämpfungseigenschaft auf.

Auf diese Weise kann eine Leckage vermieden werden und eine statische Dämpfungscharakteristik erreicht werden.

Gemäß einer Ausführungsform der Erfindung weist die Dämpfungseinrichtung eine anisotropische elastische Struktur auf, die eine unterschiedliche Dämpfungscharakteristik in unterschiedlichen Freiheitsgraden, insbesondere in unterschiedlichen translatorischen Freiheitsgraden aufweist.

Gemäß einer Ausführungsform der Erfindung weist die Dämpfungseinrichtung unterschiedliche Bereiche unterschiedlicher Elastizität auf, insbesondere unterschiedliche im Wesentlichen rotationssymmetrische Bereiche mit unterschiedlicher Elastizität.

Auf diese Weise kann die Dämpfungscharakteristik in unterschiedliche Richtungen gezielt festgelegt bzw. eingestellt werden.

Gemäß einer Ausführungsform der Erfindung ist die Dämpfungseinrichtung gegenüber wenigstens einem von dem ersten Gelenkelement und dem zweiten Gelenkelement beweglich angeordnet ist, insbesondere in Bezug auf den ersten rotatorischen Freiheitsgrad.

Auf diese Weise kann ein weiterer Bewegungsradius in Rotationsrichtung erreicht werden.

Gemäß einer Ausführungsform der Erfindung ist die Gelenkanordnung mit einer Sensoranordnung zur Erfassung wenigstens eines der Parameter Position des ersten Gelenkelementes zu dem zweiten Gelenkelement und Kraftwirkung zwischen dem ersten Gelenkelement und dem zweiten Gelenkelement, und einer Steuerungsvorrichtung versehen, wobei die Steuerungsvorrichtung ausgelegt ist die Antriebseinheit auf der Grundlage der erfassten Parameter zu steuern.

Auf diese Weise kann eine gesteuerte bzw. geregelte Bewegungsunterstützung durch Überwachen und Messen der Kräfte erreicht werden.

Gemäß einer Ausführungsform der Erfindung weist das Dämpfungselement eine definiert nachgiebige Funktionsfläche oder eine kompressible Flüssigkeit oder ein kompressibles gasförmiges oder vergleichbares Medium auf, wobei das Dämpfungselement ausgelegt ist gezielte Bewegungen parallel geschalteter kinematischer Ketten auszuführen ohne das Bewegungsmuster im Wesentlichen zu beinträchtigen.

Auf diese Weise kann die Bewegungscharakteristik durch die Auslegung der Dämpfungseinrichtung erreicht werden.

Gemäß einer Ausführungsform der Erfindung sind die Steifigkeits- und Dämpfungseigenschaften der Dämpfungseinrichtung richtungsabhängig, durch Verwendung verschiedener Materialien und/oder Flüssigkeiten und/oder Medien und/oder unterschiedlichen Formen von Dämpfungsabschnitten.

Gemäß einer Ausführungsform der Erfindung weist die Dämpfungseinrichtung ein aktives Element auf zur gezielten Einstellung der Dämpfungseigenschaften, wobei die Gelenkvorrichtung insbesondere Sensoren aufweist zur Erfassung von belastungsabhängigen und/oder positionsabhängigen und/oder winkelabhängigen und/oder geschwindigkeitsabhängen Parametern der Steifigkeits- und Dämpfungseigenschaften, wobei das aktive Element auf der Grundlage der erfassten Parameter steuerbar ist.

Gemäß einer Ausführungsform der Erfindung ist die Gelenkvorrichtung so gestaltet, dass sie zumindest eine Steuerungsmöglichkeit in Form zumindest eines Schalters zur Zustimmung zur Änderung der Steifigkeits- und Dämpfungseigenschaften oder zumindest eines Sensors, der Daten zur Belastung oder zur Position bzw. Winkelstellung liefert, die in der Steuerung verarbeitet werden, um Steifigkeits- und Dämpfungseigenschaften entsprechend zu steuern, beinhaltet.

Gemäß einer Ausführungsform der Erfindung weist das Dämpfungselement eine Anbindung an eine Aktuatorik auf, die Stellkräfte für gezielte Stellbewegungen ermöglicht.

Gemäß einer Ausführungsform der Erfindung liegt wenigstens ein Referenzierungselement zum Festlegen einer definierten Position zwischen der Gelenkvorrichtung zu einer parallelen kinematischen Kette vor, wobei wenigstens ein Arretierungs- und Kopplungselement zum Befestigen der Gelenkvorrichtung, oder zumindest eines Gelenkelementes der Gelenkvorrichtung, an zumindest einer weiteren technischen Komponente zum Aufbau eines Systems vorliegt, zur Realisierung einer Übertragung von zumindest Kräften in eine Raumrichtung bzw. zur Übertragung zumindest eines Moments in eine Richtung.

Gemäß einer Ausführungsform der Erfindung ist die komplexe Bewegung vorzugsweise mit einer translatorischen Verschiebung des Momentanpols in zumindest eine Raumrichtung als auch einer Winkeländerung/Verdrehung der Drehachse in zumindest einer Raumrichtung überlagert.

Gemäß einer Ausführungsform der Erfindung wird ein Gelenksystem bereitgestellt, welches eine oben beschrieben Gelenkanordnung aufweist, wobei das Gelenksystem eine modulare Architektur aufweist und sich gezielt aus oben beschriebenen Gelenkvorrichtungen aufbauen und bei Änderung der Anforderungen auch umbauen lässt.

Gemäß einer Ausführungsform der Erfindung wird ein Exoskelett bereitgestellt mit wenigstens einer oben beschriebenen Gelenkanordnung, wobei die Gelenkanordnung eine Bewegungscharakteristik aufweist, die der Bewegungscharakteristik eines entsprechenden menschlichen Gelenkes nachgebildet ist.

Gemäß einem zweiten Aspekt der Erfindung wird eine Gelenkvorrichtung zur technischen Realisierung komplexer rotatorischer Bewegungen bereit gestellt, mit einem ersten Gelenkelement, einem zweiten Gelenkelement und einer Dämpfungseinrichtung, wobei das erste Gelenkelement und das zweite Gelenkelement eine gemeinsame Kopplung aufweisen, wobei die Kopplung wenigstens einen ersten rotatorischen Freiheitsgrad und einen translatorischen Freiheitsgrad aufweist, wobei die Dämpfungseinrichtung derart zwischen dem ersten Gelenkelement und dem zweiten Gelenkelement angeordnet ist, dass es den translatorischen Freiheitsgrad stärker dämpft als den rotatorischen Freiheitsgrad, wobei eine Kopplungsfläche zwischen dem Dämpfungselement und wenigstens einem von dem ersten Gelenkelement und dem zweiten Gelenkelement als ein Gleitlager mit einer Drehachse für den ersten rotatorischen Freiheitgrad ausgestaltet ist, die im Wesentlichen senkrecht auf einer dadurch definierten Grenzfläche steht, wobei die Dämpfungseinrichtung aus einer Mehrzahl von elastischen Dämpfungskörpern zusammengesetzt ist, die an den Grenzflächen miteinander verbunden sind, um auf diese Weise gezielt modular die Dämpfungseigenschaften der Dämpfungseinrichtung einstellen zu können. Die verschiedenen Dämpfungskörper können unterschiedliche Dämpfungscharakteristiken aufweisen, um auf diese Weise eine gewünschte anisotrope Dämpfungscharakteristik der gesamten Dämpfungseinrichtung zu erreichen.

Gemäß einer Ausführungsform des zweiten Aspektes sind das erste und zweite Gelenkelement und die Dämpfungseinrichtung jeweils mit einer zueinander fluchtenden Durchgangsöffnung versehen, durch die ein Verbindungsbolzen ragt, der das erste und zweite Gelenkelement und die Dämpfungseinrichtung in der Bolzenerstreckungsrichtung zusammen hält.

Gemäß einer Ausführungsform des zweiten Aspektes der Erfindung ist wenigstens eines von dem ersten und zweiten Gelenkelement auf der von der Dämpfungseinrichtung abgewandten Seite mit einer konkaven sphärischen Oberfläche ausgestaltet, wobei der Bolzen an einem Bolzenkopf eine dazu korrespondierenden Gegenfläche aufweist, entlang der die Gelenkvorrichtung einen zweiten rotatorischen Freiheitsgrad aufweist.

Gemäß einer Ausführungsform des zweiten Aspektes der Erfindung sind die Dämpfungskörper scheiben- oder scheibensegmentförmig ausgestaltet, wobei die dadurch gebildeten Scheiben bzw. Scheibensegmente durch Verbindungselemente miteinander verbunden sind.

Gemäß einer Ausführungsform des zweiten Aspektes der Erfindung ist der Bolzen biegeelastisch ausgeführt, um eine unterschiedliche Komprimierung der Dämpfungseinrichtung entlang ihres Umfangs zu ermöglichen.

### Kurze Beschreibung der Figuren bzw. Zeichnungen

Ausführungsbeispiele der Erfindung sind in der Zeichnung dargestellt und werden im nachfolgenden näher beschrieben.
- Fig. 1: zeigt eine schematisch skizzierte Gestalt und Materialkombination eines Ausführungsbeispiels für eine Gelenkanordnung, die das Ziel hat eine rotatorische Bewegungen zu führen;
- Fig. 2: zeigt ein grob schematisch skizziertes zweites Ausführungsbeispiel einer Gelenkanordnung, insbesondere eine Erweiterung der Gelenkanordnung aus Fig. 1, sowie deren Zusammenwirken mit einer Antriebseinheit, Übersetzungs- und Übertragungseinheit sowie Sensoreinheit;
- Fig. 3: zeigt schematisch die mögliche Verwendung einer erfindungsgemäßen Gelenkanordnung innerhalb eines Exoskeletts für untere Extremitäten;
- Fig. 4: zeigt eine mögliche Ausgestaltung der Gelenkanordnung mit richtungsabhängigen Steifigkeiten und Dämpfungseigenschaften;
- Fig. 5: zeigt eine mögliche Ausgestaltung der erfindungsgemäßen Gelenkanordnung mit einer flexiblen und biegbaren, schwimmend gelagerten Welle bzw. einem Bolzen;
- Fig. 6: zeigt eine mögliche Ausgestaltung der erfindungsgemäßen Gelenkanordnung in Erweiterung zur Gelenkanordnung der Fig. 5, erweitert um einen flexiblen, schwingend gelagerten Achskörper, z.B. eines Bolzens, einer Welle oder Drähte oder Seile;
- Fig. 7: zeigt eine mögliche Ausgestaltung der erfindungsgemäßen Gelenkanordnung, die die Eigenschaft über die Struktur bestimmt;
- Fig. 8: zeigt eine mögliche Ausgestaltung der erfindungsgemäßen Gelenkanordnung mit modularer Gestaltung als Erweiterung der in Fig. 1-7 gezeigten Gelenkanordnung zur Realisierung einer ad-hoc Konfiguration und Rekonfiguration zur Erzielung individueller Systemeigenschaften auf Basis eines Baukastens;
- Fig. 9: zeigt eine mögliche Ausgestaltung der erfindungsgemäßen Gelenkanordnung auf der; und
- Fig. 10: zeigt eine mögliche Ausgestaltung der erfindungsgemäßen Gelenkanordnung auf der Basis von Fig. 8 mit mehreren Ringelementen.

### Detaillierte Beschreibung beispielhafter Ausführungsformen der Erfindung

Die Erfindung betrifft eine Gelenkvorrichtung und hat die primäre Aufgabe komplexe Bewegungen, d.h. sowohl rotatorische als auch translatorische, mit einem technischen System zu realisieren sowie die sekundäre Aufgabe gezielt und richtungsabhängig zu dämpfen. Die Gelenkvorrichtung gemäß der Erfindung lässt sich beispielsweise in Exoskelette einbauen. Bei Exoskeletten handelt es sich i.d.R. um anthropomorphe Systeme, d.h. sie besitzen eine menschenähnliche Gestalt, wobei das nicht zwingend heißt, dass ein Exoskelett gleich viele Freiheitsgrade wie der zu unterstützende Bereich des Menschen besitzt. In der Realität werden komplexe Bewegungen vereinfacht in technischen Systemen umgesetzt. Beispielsweise wird in Exoskeletten die Bewegung des Knies (Strecken und Beugen) durch ein "einfaches" rotatorisches Gelenk abgebildet. Für einen optimalen Einsatz muss der Momentanpol des technischen Gelenks mit dem Momentanpol des menschlichen Gelenks übereinstimmen. Beim Beugen und Strecken des menschlichen Knies findet jedoch nicht nur eine rein eindimensionale rotatorische Bewegung, sondern eine kombinierte sowohl dreidimensionale rotatorische als auch dreidimensionale translatorische Bewegung statt. Da die Gelenke klassischer Exoskelette das menschliche und natürliche Bewegungsmuster nicht exakt abbilden und oft nur eine rotatorische Bewegung erlauben, beeinflussen bzw. behindern klassische Exoskelette die menschliche Bewegung und könne schlimmstenfalls zu Gelenkschäden beim Menschen führen.

Das Gelenk bzw. die Gelenkvorrichtung gemäß der Erfindung weist diese Nachteile nicht auf und ist hinsichtlich der Struktur flexibel und je nach Ausprägungsform auch adaptiv gestaltet, um individuelle und richtungsabhängige Eigenschaften einzustellen. Die primäre Aufgabe, das ermöglichen komplexer und mehrdimensionaler Bewegungen, wird durch die gezielte Gestaltung der Struktur, Gelenkelemente und Werkstoffwahl ermöglicht. Hierfür weist die Gelenkvorrichtung gemäß einer Ausführungsform zwei Gelenkelemente, d.h. die beiden Gelenkseiten, auf, die durch ein Lager oder eine Funktionsfläche miteinander gekoppelt sein können. Die Gelenkvorrichtung kann wiederum ist so gestaltet sein, dass sie mit anderen Elementen verbunden werden kann, z.B. mit Elementen, um ein Exoskelett aufzubauen. Die Elemente können unterschiedliche Ausprägungsformen besitzen, z.B. mit fest vorgegebener Steifigkeit und Dämpfung in alle Raumrichtungen oder mit adaptiven Elementen, die steuerbar oder programmierbar sind. Bei der adaptiven Variante kann dies z.B. belastungs- oder positionsgesteuert oder -programmiert erfolgen. Der Einsatz der erfindungsgemäßen Gelenkvorrichtung kann unterschiedliche Zwecke haben. Dazu zählen der Einsatz zur Bewegungsunterstützung, d.h. zur Führung und/oder Kraftverstärkung, oder zu Trainings- und Rehabilitationszwecken, z.B. durch gezieltes erhöhen eines innerer Widerstandes. Die Gelenkvorrichtung, d.h. das technische Gelenk wir parallel zu einem entsprechenden menschlichen Gelenk angeordnet und somit quasi die Kraft umgeleitet (oder auch zu technischen Systemen wie Roboter). Durch die spezielle nachgiebige/flexible Gestalt muss die Gelenkvorrichtung nicht komplett der menschlichen Anthropometrie, insbesondere der Anzahl und geometrischen Anordnung von Freiheitsgraden nachempfunden werden.

Grundsätzlich soll die erfindungsgemäße Gelenkvorrichtung zwei verschiedene Eigenschaften vereinen - z.B. ein möglichst steifes System breitstellen, etwa beim gestreckten Bein, um die maximale Kraft übertragen zu können, sowie ein möglichst nachgiebiges und weiches System bereitstellen, etwa wenn das Bein gebeugt ist und keine Kraft übertragen werden soll. Darüber hinaus kann über die Gestaltung und Materialien der erfindungsgemäße Gelenkvorrichtung die maximale und minimale zu übertragende Kraft sowie den Grad der Flexibilität eingestellt werden.

Eine weitere Aufgabe, die mit der erfindungsgemäßen Gelenkvorrichtung gelöst werden kann ist die gezielte Dämpfung. Diese kann durch die Integration entsprechender Elemente in die erfindungsgemäße Gelenkvorrichtung realisiert werden. Dies kann richtungsabhängig, also anisotrop realisiert werden. Die Adressierung beider Aufgaben kann über die spezielle Gestaltung, etwa durch eine gezielte Gestaltung der Struktur, Gelenkelemente und Wahl von Werkstoffen, aber auch adaptiv, d.h. z.B. über steuerbare oder programmierbare Elemente, erfolgen.

Die erfindungsgemäße Gelenkvorrichtung weist gemäß einer Ausführungsform zumindest zwei Gelenkelementen auf, die entweder über ein weiteres Element wie ein Lager oder über Funktionsflächen miteinander verbunden sind, z.B. mit einer Schraubverbindung. Je nach Gestaltung sind für die erfindungsgemäße Gelenkvorrichtung zusätzliche Elemente und/oder Flüssigkeiten und/oder Sensoren und/oder eine Steuerungseinheit erforderlich. Unter Umständen kann die erfindungsgemäße Gelenkvorrichtung um einen Aktuator ergänzt werden. Bei der Vorrichtung existiert keine fest vorgegebene Rotationsachse, wie es bei klassischen starren Gelenken ist, sondern nur eine "grob" vorgegebene, aber belastungs- und optional positionsabhängig verschobene Rotationsachse, die z.B. komplexere menschliche Bewegungen ermöglicht. Hierdurch können menschliche Bewegungsmuster erhalten bleiben. Die sogenannte Flexibilität/Adaptierbarkeit der Bewegungsachse, die sich in einer linearen Verschiebung und/oder Winkelstellung äußern kann, kann auf unterschiedliche Weise erzielt werden. Hierzu zählen etwa die gezielte Beschichtung der harten und steifen Gelenkelemente mit einem weichen und elastischen Material wie einem Polymer, oder die Verwendung eines in die Dämpfungseinrichtung integriertes Kammer- oder Ventilsystems inklusive einer (adaptiven) Flüssigkeit, wie z.B. einem Ferrofluid. Im Fall der gezielten Beschichtung können damit gezielt die Eigenschaften in allen Raumrichtungen eingestellt werden. Eine Fertigung kann beispielsweise mit einem 3D-Druckverfahren erfolgen. Eine Variation sowie die Einstellung der Eigenschaften kann darüber hinaus auch über die Gestaltung der Geometrie erfolgen. Bei Verwendung der Flüssigkeiten können Flüssigkeiten mit fest eingestellten Eigenschaften oder mit veränderbaren Eigenschaften zur Anwendung kommen. Über diese Parameter, sowie die geometrische Gestaltung und eventuell weitere integrierte Elemente kann der Wiederstand und/oder die Steifigkeit im Kammerinneren eingestellt werden.

Um die erfindungsgemäße Gelenkvorrichtung mit weiteren Elementen koppeln zu können, etwa um ein Exoskelett aufzubauen, kann die erfindungsgemäße Gelenkvorrichtung mit entsprechenden Schnittstellen hierfür entsprechend gestaltet sein. Eine Möglichkeit stellen standardisierte Schnittstellen dar.

Durch die gezielte Gestaltung der Struktur, der erfindungsgemäßen Gelenkvorrichtung und der Wahl der Materialien können unterschiedliche Bewegungsformen, Absolutwerte (lineare Verschiebungen und Winkeländerungen der Rotationsachse) sowie Eigenschaften hinsichtlich Steifigkeit und Dämpfung erreicht werden. Zur Anwendung kommen kann ein Gelenksystem mit einer erfindungsgemäßen Gelenkvorrichtung etwa dann wenn die genaue Bewegungsform nicht bekannt ist, oder gezielt eine Nachgiebigkeit gefordert oder gewünscht ist, etwa um das menschliche Gelenk nicht mechanisch zu belasten oder Bänder zu dehnen. Die Nachgiebigkeit/Flexibilität kann intrinsisch durch die Gestaltung, Materialien etc. oder durch die (adaptive) Steuerung oder Programmierung erzielt werden. Gerade im Vergleich zu klassischen Gelenken in Exoskeletten schränkt die erfindungsgemäße Gelenkvorrichtung die menschliche Bewegung weniger ein. Je nach Gestaltung kann die Vorrichtung in vorgegebenen Gelenkwinkeln die Steifigkeit einer parallel angeordneten Struktur um ein Vielfaches verstärken oder eben auch in andern, aber fest vorgegebenen Gelenkwinkeln aufgrund der hohen Nachgiebigkeit/Flexibilität unverändert (weich) lassen. Winkelabhängige oder belastungsabhängige Eigenschaften lassen sich konstruktiv, oder aber auch durch die Materialentscheidung einbringen. Bei der belastungsabhängigen Variante kann die Stärke der Zuschaltung/Unterstützung folglich proportional zur Belastung erfolgen, die vornehmlich durch Sensoren, z.B. durch EMG-Sensoren oder Kraftsensoren ermittelt wird. Eine Zuschaltung kann aber auch manuell erfolgen. Dies kann ebenfalls zum Ziel haben, die Kraft des Nutzer zu unterstützen bzw. zu vergrößern, oder eben auch das Ziel haben z.B. eine menschliche Extremität zu Trainieren (Trainings- oder Rehabilitationszweck). Hierfür ändert sich die Funktionsweise - von Kraftverstärkung zu erhöhtem Wiederstand. Auch dies kann belastungs- und winkelabhängig erfolgen. Durch Integration von Sensoren, z.B. EMG-Sensoren oder Kraftsensoren, kann hier sogar eine automatisierte Dokumentation erfolgen.

Eine besondere Verwendung der erfindungsgemäßen Gelenkvorrichtung kann exemplarisch in drei Aspekten gesehen werden. Die Vorrichtung kann entweder aus flexiblen und weichen (materialseitig) mit eingestellten Steifigkeiten und Dämpfungsgraden oder bspw. durch eine integrierte kompressible oder nicht kompressible Flüssigkeit in Kombination mit einem speziellen Kammer- und Ventilsystem eine Einstellung dieser Parameter ermöglichen. Durch Realisierung dieses Aspektes greift die Vorrichtung deutlich reduziert in die Bewegung des gekoppelten Systems, z.B. die menschlichen unteren oder oberen Extremitäten ein, sodass sich das Bewegungsmuster des zu unterstützenden Bereichs nicht verändert. Alternativ kann die erfindungsgemäße Gelenkvorrichtung je nach Gestalt ein adaptierbares Systemverhalten besitzen (z.B. belastungs-, winkel- und positionsabhängig). Dies kann manuell, teil-automatisiert oder automatisiert eingestellt werden. Weiter alternativ kann die erfindungsgemäße Gelenkvorrichtung unterschiedliche Funktionen übernehmen. Hierzu zählt zum einen die Betriebsart zur Unterstützung, vornehmlich zur Kraftsteigerung und Führung, und zum anderen die Betriebsart für Trainings- und Rehabilitationszwecke wofür definierte Wiederstände manuell, teil-automatisiert oder vollautomatisiert, z.B. auf Basis von Sensordaten erfolgt.

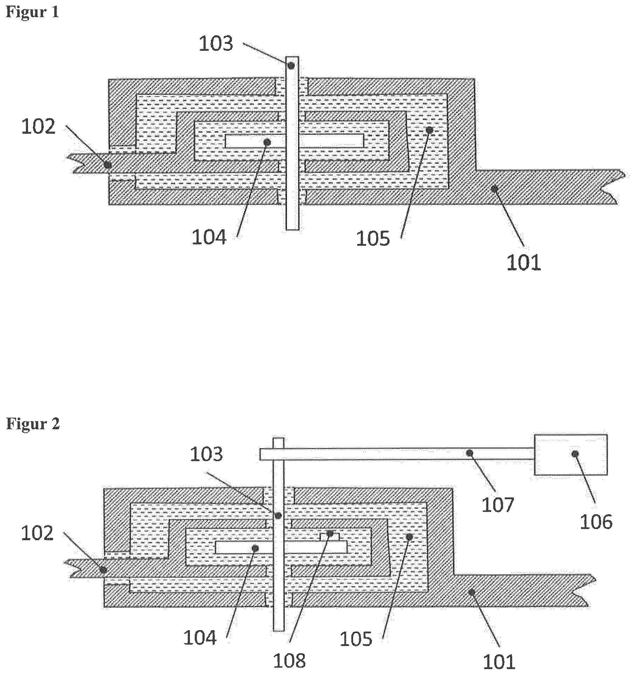

Ein mögliches Einsatzgebiet der erfindungsgemäßen Gelenkvorrichtung ist die Unterstützung von menschlichen Gelenken bei hilfebedürftigen und gehandicapten Personen oder auch die Führung von technischen Kinematikelementen, z.B. von nicht komplett eigensteifen oder nachgiebigen Elementen. Bei Anwendungen mit hilfebedürftigen oder gehandicapten Personen ist z.B. an die Führung von rotatorischen Bewegungen, die Kraftunterstützung bei rotatorischen Bewegungen, um z.B. ein selbstständiges Bewegen zu realisieren, die Lastabnahme, d.h. Vermeidung von Überbelastung durch gezielte Einstellung der "richtigen und optimalen" Belastung, sowie an Trainings- und Rehabilitationsanwendungen zu denken. Je nach Ausprägungsvariante besitzt die erfindungsgemäße Gelenkvorrichtung unterschiedlich viele Freiheitsgrade und Rückstellkräfte (beispielsweise bis zu sechs Freiheitsgrade). Gemäß einer Ausführungsform erfolgt die Rückstellkraft in gewünschter Bewegungsrichtung, z.B. dem Beugen und Strecken des Knies beim Gehen, durch einen Aktuator, der an die Vorrichtung angeschlossen werden kann. Dies ist in der in Fig. 2 gezeigten Ausführungsform exemplarisch skizziert. Dies verdeutlicht die Grundidee: ohne externen Antrieb eine im Wesentlichen reibungsfreie Bewegung in Hauptrichtung (Rotation) und gezielt eingestellte Elastizitäten in den anderen Richtungen zu erreichen.

Die erfindungsgemäße Gelenkvorrichtung unterstützt den Anwender bzw. den Nutzer oder technische Systeme durch eine zu einem Gelenk im Wesentlichen parallel angeordnete technische Vorrichtung, die flexible und unter Umständen adaptiv (manuell, steuerbar, programmierbar) gestaltet werden kann. Die erfindungsgemäße Gelenkvorrichtung kann insofern erforderlich mit weiteren (technischen) Elementen gekoppelt werden.

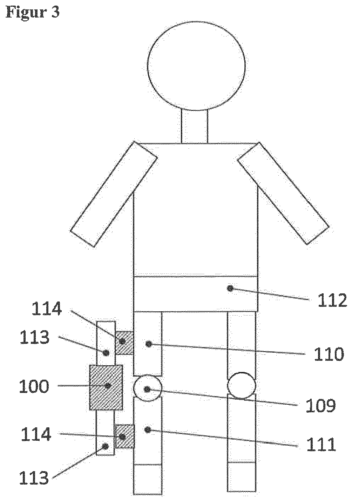

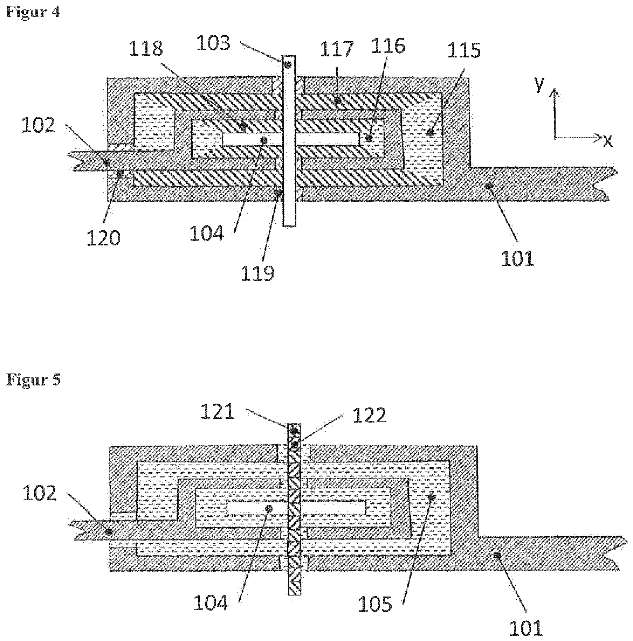

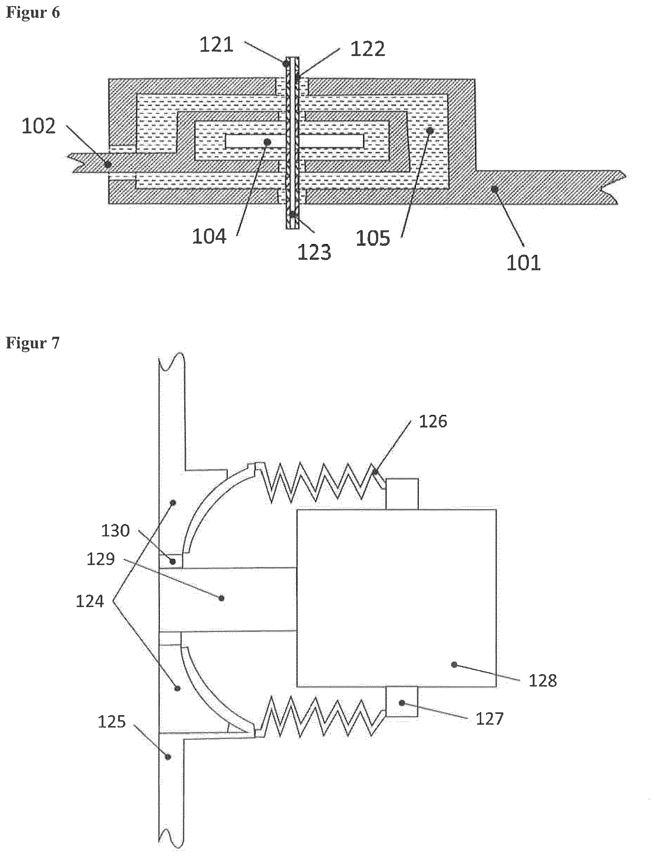

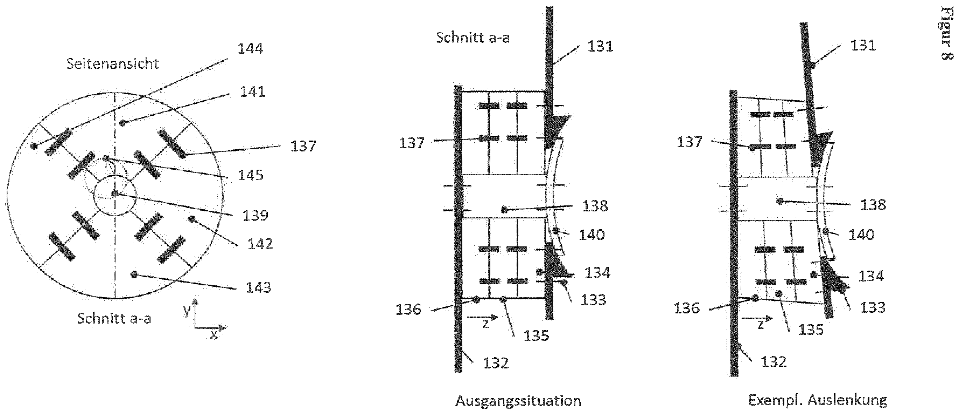

Nachfolgend werden anhand der beigefügten Figuren Ausführungsbeispiele der erfindungsgemäße Gelenkvorrichtung dargestellt. Figur 1 zeigt eine Ausführungsform einer elastischen Vorrichtung zur Abbildung rotatorischer Bewegungen mit linearen Verschiebungen und Winkeländerungen der Rotationsachsen. Figur 2 zeigt eine Erweiterung des ersten Beispiels um eine Antriebseinheit, Übersetzungs- und Übertragungseinheit sowie Sensoreinheit. Figur 3 zeigt eine mögliche Verwendung der Vorrichtung innerhalb eines Exoskeletts für die unteren Extremitäten. Figur 4 zeigt eine Ausführungsform für eine Vorrichtung mit richtungsabhängigen Steifigkeits- und Dämpfungseigenschaften. Figur 5 zeigt eine weitere Ausprägungsform mit spezieller, schwimmend gelagerten flexiblen Welle, die aus zumindest zwei harten und einem weichen Element besteht. Figur 6 zeigt eine Ausführungsform, die eine Integration zumindest eines Drahts/Seils in die flexible, schwimmend gelagerte Welle vorsieht, als Erweiterung zur Ausführungsform der Figur 5, die steuerbar ausgeführt sein kann. Figur 7 und 8 zeigen eine Ausführungsform mit hydraulischen oder vergleichbaren Flüssigkeiten bzw. pneumatischen Prinzipien, um eine Dämpfung abhängig vom Freiheitsgrad zu erreichen.

In Fig. 1 ist ein erstes Beispiel für eine erfindungsgemäße Gelenkvorrichtung skizziert. Die Vorrichtung weist in dieser Ausführungsform zwei Gelenkelemente 101 und 102 auf, die über eine Dämpfungseinrichtung 105, z.B. einem homogenen Füllkern 105, z.B. aus Polymer, flexibel miteinander verbunden sind, wobei diese hier durch die schwimmend gelagerte Achse, Welle oder Bolzen 103 und einen Lagerkörper 104 geführt werden. Bei dieser Ausführungsform sind die Steifigkeit und die Dämpfungseigenschaften in allen Raumrichtungen aufgrund ähnlicher Abstände zwischen den starren Elementen nahezu identisch. Die Dämpfungseinrichtung, hier in Form des Füllkerns 105 besitzt dabei die Eigenschaft, dass sie an der schwimmend gelagerten Welle 103 sowie an dem Kolben zwischen dem zweiten Gelenkelement 102 und dem ersten Gelenkelement 101 (links in Fig. 1) als Art Gleitlager realisiert ist. Die Grenzfläche, eine Gestaltung mit fester Anbindung oder zumindest einer Fläche mit Reibung, kann darüber hinaus gemäß einer weiteren Ausführungsform mit automatischem Widerstand und Rückstellung ausgestaltet sein, etwa wenn die Anwendung als Trainings- und Rehabilitationsgerät vorgesehen ist. Dahingegen kann das Lager bzw. Lagerkörper 104 fest in die Dämpfungseinrichtung, hier den Füllkern 105 integriert sein, um Kräfte übertragen zu können. Die Dämpfungs- und Steifigkeitseigenschaften werden bei dieser Ausführungsform hauptsächlich durch das verwendete Kernmaterial, die Spaltgrößen und die geometrische Gestaltung (z.B. Schrägen) bestimmt. Die Dämpfungseinrichtung, hier der Füllkern 105 ist bevorzugt eine elastische Masse, kann aber auch eine Flüssigkeit sein. Bei Verwendung von Flüssigkeiten muss jedoch die Gestaltung aufgrund von z.B. dem Fließverhalten angepasst werden. Mit der Dämpfungseinrichtung 105 kann allgemein die Steifigkeit bzw. Nachgiebigkeit eingestellt werden, je nach Dimensionierung und Auslegung. Die Dämpfungseinrichtung kann so dimensioniert werden, dass das Gelenk eine gewünschte Steifigkeits- bzw. Nachgiebigkeitscharakteristik aufweist. Die Charakteristik kann auch nicht-linear sein oder auch eine geschwindigkeits- oder lastabhängige Steifigkeit bzw. Nachgiebigkeit aufweisen, etwa durch einstellen einer Viskosität und einer Viskositätscharakteristik (scherverdünnende oder scherverdickende Viskosität). Dementsprechend kann von Dämpfung und Nachgiebigkeit im Zusammenhang mit der Dämpfungseinheit gesprochen werden. Das erste Gelenkelement 101 und das zweite Gelenkelement 102 können jeweils eine Gelenkkapsel ausweisen, die konzentrisch zueinander angeordnet sind. Sofern ein Lagerkörper 104 an der Achse 103 vorgesehen ist, kann dieser ebenfalls konzentrisch zu den beiden Gelenkkapseln angeordnet sein. Die Dämpfungseinrichtung 105 kann mit ihren einzelnen Abschnitten allseitig einen Abstand zwischen den Gelenkkapseln und dem Lagerkörper 104 gewährleisten. Der Abstand muss nicht überall gleich sein, kann aber im Unbelasteten Zustand symmetrisch sein.

Fig. 2 zeigt die erfindungsgemäße Gelenkvorrichtung gemäß Fig. 1 mit einer Antriebseinheit 106, die über eine Getriebe- und Übertragungseinheit 107 mit der schwimmend gelagerten Welle 103 verbunden ist. Als Getriebe- Übertragungseinheit kann z.B. ein Seilzugsystem verwendet werden. Diese Ausführungsform kann unter Umständen durch eine Sensoreinheit 108 erweitert werden, in dem skizzierten Fall zur Messung von Gelenkwinkel am Lager 104. Diese Daten können z.B. zur Sollwertberechnung des Aktuators 106 verwendet werden. Beispielsweise lässt sich damit eine gelenkwinkeladaptive Unterstützung umsetzen. Statt der Sensorik zur Winkelmessung 108 könnte auch z.B. eine externe Sensorik, z.B. Kraftsensoren in Schnittstellen oder EMG-Sensoren zur Messung der Muskelaktivität bei körpergetragenen Systemen genutzt werden. Es ist auch möglich die erfindungsgemäße Gelenkvorrichtung so auszugestalten, dass die Messung des Antriebsstroms und die Rückkopplung zur Sollwertberechnung möglich ist. Statt einer aktiven Variante mit, z.B. einem Elektromotor, künstlichen Muskeln oder Pneumatikaktoren, ist auch eine passive Aktuierung mit z.B. einer mechanischen Drehfeder oder Gasdruckfeder möglich.

In Fig. 3 ist eine erfindungsgemäße Gelenkvorrichtung 100 gemäß einer Ausführungsform der Erfindung dargestellt, die das Zusammenwirken und die Kopplung, in diesem Fall mit einem Unterschenkel 111 und ein Oberschenkel 110 einer hilfebedürftigen oder gehandicapten Personen in Form eines Exoskeletts zeigt. Bei diesem Beispiel ist die erfindungsgemäße Gelenkvorrichtung 100 parallel zum menschlichen Kniegelenk 109 angeordnet, und kann dieses entsprechend entlasten und unterstützen. Die Kopplung mit dem Oberschenkel 110 und dem Unterschenkel 111 kann über eine mechanische Struktur eines Exoskeletts 113 und eine Mensch-Technik-Schnittstelle 114 erfolgen. Der Antrieb ist in Fig. 3 nicht dargestellt, kann aber z.B. wie in Fig. 2 dargestellt gestaltet sein. Dieser Antrieb kann beispielsweise direkt am Exoskelett oder auch am menschlichen Becken 112 angebracht sein. Obwohl in den Figuren nicht durchgängig Sensoreinheiten dargestellt sind, können etwa Kraftsensoren in die Mensch-Technik-Schnittstellen 114 integriert sein, oder EMG-Sensoren an den belasteten Körperteil 109-111 angebracht werden. Die Vorrichtung ist hierbei beispielsweise auf der Außenseite des menschlichen Beins angebracht. Möglich wäre auch eine Anbringung auf der Innenseite, oder die Verwendung von zwei Gelenken gleichzeitig auf der Innen- und Außenseite, um dadurch die mögliche Übertragungskraft bzw. die zu übertragenden Momente zu erhöhen oder auch die Steifigkeits- und Dämpfungseigenschaften zu verändern.

In Fig. 4 ist eine erfindungsgemäße Gelenkvorrichtung mit richtungsabhängigen Steifigkeits- und Dämpfungseigenschaften, vereinfacht für zwei Raumrichtungen dargestellt. Eine weitere Differenzierung ist jedoch auch möglich, z.B. eine Unterscheidung in Anlehnung an die Zug- und Druckstufe bei Feder-Dämpfer-Systemen. Das kann für alle drei Raumrichtungen, ebenso wie spezielle Kippeigenschaften realisiert werden. Konkret ist bei dieser Ausführungsform eine Steifigkeit und Dämpfungseigenschaft in x-Richtung durch eine Dämpfungseinrichtung in Form eines Kerns 115 und 116 sowie für die y-Richtung durch einen Kern 117 und 118 vorgesehen. Alle Kerne können, wie auch bei den Ausführungen zuvor, rotationssymmetrisch ausgeführt sein. Der Kern 118 und 116 kann bei dieser Ausprägungsform mit dem Lager 104 verbunden sein. Die Verbindung zwischen den beiden Gelenkelementen 101 und 102 und der schwimmend gelagerten Achse 103 der Vorrichtung kann mit Hilfe einer Buchse 119 erfolgen. Zwischen den Gelenkelementen 101 und 102 kann zudem ein Abdichtelement 120 vorgesehen sein.

Fig. 5 skizziert eine weitere Ausführungsform der erfindungsgemäßen Gelenkvorrichtung. Hierbei handelt es sich bis auf die schwimmend gelagerte Welle, um die gleichen Grundelementen wie in Fig. 1. Die Welle kann wie bei den vorherigen Ausprägungsvarianten starr gestaltet werden, jedoch auch möglich diese an einzelne Stellen oder komplett elastisch zu gestalten. Vereinfacht kann man dann diese Welle als serielle Anordnung von starren Elementen 121 und elastischen bzw. weichen/flexiblen Elementen 122 beschrieben werden. Die Anzahl und Abmessungen der starren und elastischen Elemente kann variieren, vereinfacht mit einer geringen Anzahl an harten und elastischen Elementen. Auch hierdurch kann eine lineare Verschiebung des Momentanpols in zumindest einer Raumrichtung sowie eine Verkippung/Veränderung der Rotationsachse in zumindest einer Richtung realisiert werden. Der Füllkern kann auch bei dieser Ausführungsform die bei den vorherigen Varianten beschriebenen Ausführungsformen annehmen. Eine parallele Anordnung der elastischen und harten Elemente ist wie auch ein hybrider Aufbau möglich.

Eine zu Fig. 5 erweiterte Ausführungsform der erfindungsgemäßen Gelenkvorrichtung ist in Fig. 6 dargestellt. In die schwimmend gelagerte Welle mit harten Elementen 121 und elastischen Elementen 122 können dünne Elemente wie Drähte oder Seile 123 integriert sein. Hierdurch ist es möglich die Steifigkeit und die Dämpfungseigenschaften zu ändern. Eine besondere Ausführungsform kann an dieser Stelle Drähte aus einer Formgedächtnislegierung (FGL) vorgesehen sein, die es ermöglicht die Welle, nachdem Prozesskräfte eine Veränderung der Rotationsachse hervorgerufen haben, diese wieder "zurückzustellen", vereinfacht mit einer geringen Anzahl an harten und elastischen Elementen, sowie einem Drahtelement. Die Steuerung des FGL-Drahts kann hierbei manuell oder belastungsorientiert erfolgen.

Ein weiteres Beispiel der erfindungsgemäße Gelenkvorrichtung sieht die Verwendung von hydraulischen oder vergleichbaren Flüssigkeiten vor, insbesondere Hydrauliköl, um über die Flüssigkeiten gezielt die Steifigkeit und Dämpfung der Dämpfungseinrichtung 105 einzustellen. Beispielsweise lassen sich elektrorheologische Flüssigkeiten einsetzen, um wie bereits in anderen Ausführungsformen auch ein adaptives System zu erhalten. Auch eine Kombination mit den anderen Ausführungsformen ist denkbar, d.h. den Aufbau eines hybriden Systems, bestehend aus elastischen Elementen und Komponenten auf der Basis von hydraulischen oder vergleichbaren Flüssigkeiten. Auch die Verwendung von elastischen Anschlägen in Kombination mit hydraulischen Elementen kann vorgesehen sein.

Gemäß einer weiteren Ausführungsform der Erfindung kann die Dämpfungseinrichtung 105 als ein pneumatisches Kammersystem ausgestaltet sein. Über ein Gas, z.B. Luft oder ein vergleichbares gasförmiges Medium kann bei dieser Ausführungsform die Dämpfungseinrichtung 105 durch eine spezielle Kammerstruktur erweitert werden, z.B. mit Ventilen. Dadurch kann die Gelenkeigenschaft eingestellt werden, und im Fall einer aktiven Ausführung, d.h. Integration von Sensorik, auch belastungs-, positions- und winkeladaptiv erfolgen.

Im Zusammenhang aller Ausführungsformen, aber besonders der Ausführungsformen der Figuren 5 und 6, können unterschiedliche geometrische Formen der Vorrichtungselemente bzw. Kammersysteme für die Dämpfungseinrichtung 105 genutzt werden, die wiederum ebenfalls die Eigenschaften der Steifigkeit und Dämpfung mitbestimmen können. Bei Verwendung hydraulischer oder pneumatischer Systeme kann darüber hinaus das Medium ebenfalls zur Steuerung bzw. Sollwertberechnung des Aktuators genutzt werden (Messung des Drucks durch geeignete Sensoren).

Eine weitere Ausführungsform (ohne Darstellung) sieht die Verwendung der erfindungsgemäßen Vorrichtung als Trainings- und Rehabilitationsgerät vor. Diese kann verwendet werden zum Vorführen von Bewegungen, also in Richtung der Kraftverstärkung. Ferner kann diese verwendet werden entgegen der eigentlichen Bewegung, also als Bremse bzw. zum Erhöhen des Widerstandes. Durch integrierte Sensorik sowie einer Auswerteeinheit ist auch eine Rückkopplung bzw. Aufzeichnung des Trainings- bzw. Rehabilitationserfolgs möglich.

In Fig. 7 ist eine weitere Ausführungsform der erfindungsgemäßen Vorrichtung dargestellt. Bei dieser Ausführungsform wird die Flexibilität der Dämpfungseinrichtung über eine spezielle Gestalt realisiert. Die Gelenkvorrichtung weist zwei Gelenkelemente bzw. Gelenkseiten auf. Diese besitzen allerdings einen modifizierten Aufbau. Die erste Gelenkseite 124 besitzt eine Kugelpfanne. Die zweite Gelenkseite besitzt einen Kugelkopf. Durch diese Gestaltung ist eine Abrollbewegung in alle drei Raumrichtungen möglich, die auch eine translatorische Bewegung der Rotationsachse abbilden kann. An der zweiten Gelenkseite, die einen Kugelkopf besitzt, ist ein Balg 126 angebaut, der wiederum mit einer Anbindung eines Gehäuses einer Antriebseinheit 127 verbunden ist. In diesem Gehäuse 128 kann sich beispielsweise die Antriebseinheit 127 befinden. Hierbei kann es sich um einen Elektromotor mit Getriebe handeln. Auch pneumatische, hydraulische oder mechanische Aktuatoren können zur Anwendung kommen. Der Antrieb kann direkt, aber auch genauso indirekt über z.B. einen Seilzug realisiert werden. Die durch die Antriebseinheit angetriebene Achse 129 kann über eine Spannvorrichtung 130 mit der ersten Gelenkseite 124 verbunden sein. Somit ist der Kraftschluss möglich.

In Fig. 8 ist eine weitere Ausfiihrungsform der erfindungsgemäßen Gelenkvorrichtung in der Seitenansicht sowie einem Schnitt im Ausgangszustand und ausgelenkten Zustand dargestellt. Eine Kerneigenschaft, d.h. die Realisierung einer translatorischen Verschiebung oder rotatorischen Veränderung der Bewegungsachse ist auch hier gegeben, jedoch hat diese Variante einen anderen Aufbau. Hierbei handelt es sich um eine Variante mit modularem Aufbau. Hierdurch lassen sich die Eigenschaften in die einzelnen Raumrichtungen (primär in drei Richtungen - x-, y- und z-Richtung, die gekennzeichnet sind) gezielt einstellen. Für die Dämpfungseinrichtung findet hierbei ein Baukastensystem Anwendung aus "Gummielementen" mit unterschiedlichen Steifigkeits- und Dämpfungseigenschaften, welche hinsichtlich Standards gefertigt werden und den Aufbau eines individuellen Eigenschaftsprofils ermöglichen. Hierfür besitzt die Vorrichtung folgende Gestalt: Die Anbindung an weitere Elemente des Systems erfolgt über die obere 131 und untere Anbindungsplatte 132, die gleichermaßen das erste und zweite Gelenkelement 101, 102 analog der vorgenannten Figuren verkörpern. Die obere Anbindung 131 hat eine Bohrung mit definiertem Durchmesser, welche die Eigenschaft des mechanischen Endanschlags bestimmt. Gleiche Eigenschaft würde sich auf der gegenüberliegenden Seite ebenfalls durch eine Ringscheibe realisieren lassen, die allerdings nicht dargestellt ist. Diese nicht dargestellte Ringscheibe sowie die obere Anbindungsplatte 131 sind jeweils mit einem Scheibenelement über eine Verschraubung 133 verbunden. In der dargestellten Ausführungsform, bei der drei Scheibenelemente verwendet werden (zwischen 1 - n Elemente könnten je nach Anforderungen gekoppelt werden), ist die obere Anbindungsplatte 131 bzw. das erste Gelenkelement mit dem ersten Scheibenelement 134 verbunden (z.B. mit Hilfe einer trichterförmigen Bohrung, in der Fig. 8 nicht dargestellt ist). Die gegenüberliegende Ringscheibe bzw. das zweite Gelenkelement 132 ist in der gezeigten Ausführungsform mit dem dritten Scheibenelement 136 verbunden. Dazwischen liegt bei dieser Ausführungsform das zweite Scheibenelement 135. Alle Scheibenelemente 134, 135, 136 sind hier beispielsweise mit Verbindungsstiften verbunden 137 (in diesem Fall mit je vier). Die untere Anbindungsplatte 132 bzw. zweite Gelenkelement ist wiederum nicht fest mit den Scheibenelementen verbunden. Vielmehr ist die Fläche zwischen der unteren Anbindungsfläche 132 und dem Scheibenelement 136 bzw. der Ringscheibe wie ein Gleitlager gestaltet (keine oder zumindest nur geringe Reibung), um eine Rotation zwischen der unteren 132 und oberen Anbindungsplatte 131 zu realisieren. Um dies überhaupt definiert zu ermöglichen ist bei dieser Ausführungsform an der unteren Anbindungsplatte 132 eine Achse 138 mit einer Verschraubung angebracht. Die Achse 138 besitzt einen Gelenkmittelpunkt im unverschobenen Zustand 139, welche wiederum mit dem Gegenhalter 140 verspannt wird. Zwischen Gegenhalter 140 und oberer Gelenkplatte 131 ist hier ein Gleitlager vorgesehen. Der Gegenhalter 140 besitzt, wie skizziert, eine runde Form. Jedoch ist auch eine gerade Form möglich, dies kann dann aber zu anderen Steifigkeits- und Dämpfungseigenschaften und somit Auslenkungseigenschaften führen. Die Achse 138 kann starr oder elastisch gestaltet sein, was ebenfalls zu unterschiedlichen Eigenschaften führt.

Jedes Scheibenelement 134, 135, 136 kann aus jeweils unterschiedlich viele Kreisausschnittelemente (1 - n) aufweisen, in der dargestellten Ausführungsform je vier Kreisausschnittelementen 141, 142, 143, 144, die hier mit Verbindungsstiften 133 verbunden sind. Die Anzahl, Geometrie und die Wahl des Materials dieser Stifte bestimmen an dieser Stelle, wie auch zwischen den Scheibenelementen 134, 135, 136 wiederum die Steifigkeit.

Die Modularität ermöglicht unterschiedliche Gestaltungsmöglichkeiten für die Scheibenelemente 134, 135, 136, die Kreisausschnittelemente 141, 142, 143, 144 und die Achse 138, um die Steifigkeits- und Dämpfungseigenschaften des Gelenks gezielt einzustellen. Dies ermöglicht wiederum gezielte translatorische Verschiebung der Gelenkachse in bis zu drei Richtungen (beispielhaft für eine Raumrichtung (y) in Fig. 8 links skizziert) und rotatorische Veränderung der Gelenkachse (um bis zu drei Achsen) bei externen Lasten/Kräften. So kann die Steifigkeit etwa innerhalb eines Scheibenelements durch die vier Kreisausschnitte so eingestellt werden, um die translatorische Verschiebung gezielt vorzugeben. Durch unterschiedliche Eigenschaften zwischen den Scheibenelementen kann die Rotationseigenschaft eingestellt werden. Darüber hinaus kann die Achse 138 aus unterschiedlichem Material bestehen (z.B. Gummi oder Metall) um darüber hinaus die Eigenschaft der translatorischen und rotatorischen Verschiebung bzw. Veränderung zielgerichtet einzustellen.

Es sei verstanden, dass die Anzahl der Scheiben und die Anzahl der Kreissegmente einer Scheibe variiert werden kann. Die Kreissegmente müssen dabei nicht zwingend einen gleichen Winkel aufweisen. Die Scheiben können auch unterschiedliche dicken aufweisen. Anstelle eine diagonal variierenden Auswahl der Kreissegmente über die verschiedenen Scheiben kann auch eine Kombination von keilförmigen Scheiben erfolgen, deren Oberflächen zueinander geneigt sind.

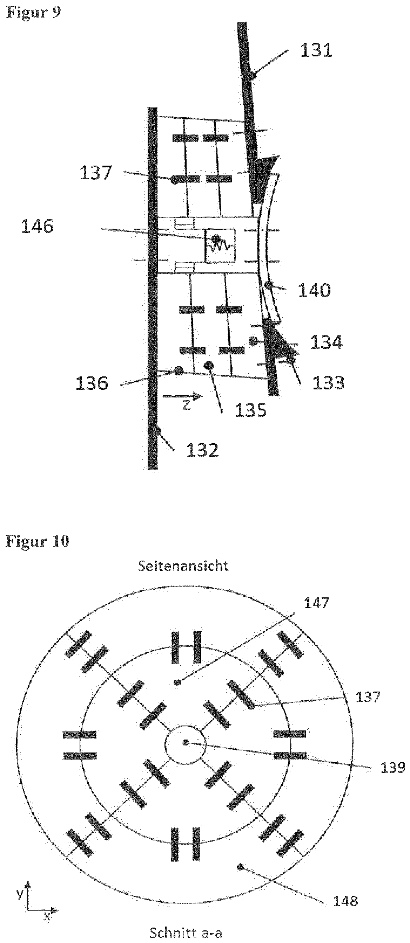

In Fig. 9 ist eine weitere Ausführungsform der Erfindung dargestellt. Wie bereits in der vorherigen Ausführungsform dargestellt, kann die Achse 138 starr oder flexibel gestaltet sein. Weitere Gestaltungsmöglichkeiten sind jedoch darüber hinaus denkbar. Bei dieser Ausführungsform ist die Achse mit einer Feder 146 ausgestattet, die bei Querkräften, die z.B. zu einer Verkippung der ersten 131 und zweiten Gelenkseite 132, bzw. einer Verkippung des ersten Gelenkelementes und des zweiten Gelenkelementes führen können, und so die notwendige Flexibilität ermöglicht. Zug- und Druckkraft kann hier unterschiedlich eingestellt werden, entweder im Vorhinein oder dynamisch durch einen weiteren Aktuator. Auch andere Aktuatoren können hierfür eingesetzt werden, unter anderen ergänzt durch eine Sensoreinheit zur Messung der auftretenden Kräfte.

In Fig. 8 und 9 wird eine Ausführungsform mit einem Kreisring beschrieben. Eine gezieltere Einstellung der Steifigkeits- und Dämpfungseigenschaften ist bei der Verwendung mehrerer Kreisringe möglich (1-n sind möglich). Eine Variante mit zwei z.B. konzentrischen Kreisringen, Ring 147 und 148, und ebenfalls vier Kreisschnittelementen ist in der Fig. 10 als Seitenansicht grob skizziert. Die Verbindung der Kreisringe kann mittels Verbindungsstiften 137 erfolgen. Je nach gewünschter Eigenschaft können sich auch diese in Anzahl und Ausprägung unterscheiden.

### Bezugszeichenliste

- 100: Vorrichtung
- 101: erste Gelenkseite, erstes Gelenkelement
- 102: zweite Gelenkseite, zweites Gelenkelement
- 103: schwimmend gelagerte Achse, Welle, Bolzen
- 104: Lager, Kugellager
- 105: Dämpfungseinrichtung, Innenkern
- 106: Antrieb, z.B. Elektromotor
- 107: Getriebe- und Übertragungseinheit, z.B. Seilzug
- 108: Sensoreinheit zur Messung von Winkeln
- 109: Kniegelenk
- 110: menschlicher Oberschenkel
- 111: menschlicher Unterschenkel
- 112: menschliches Becken
- 113: mechanische Struktur des Exoskeletts
- 114: Mensch-Technik-Schnittstelle
- 115: äußerer Kern zur Übertragung in x-Richtung
- 116: innerer Kern zur Übertragung in x-Richtung
- 117: äußerer Kern zur Übertragung in y-Richtung
- 118: innerer Kern zur Übertragung in y-Richtung
- 119: Buchse für schwimmend gelagerte Achse
- 120: Abdichtungselement zwischen Element 1 und 2
- 121: harte Elemente der schwimmend gelagerten Welle
- 122: weiche Elemente der schwimmend gelagerten Welle
- 123: in die schwimmend gelagerte Welle gelagerte Elemente, bevorzugt Drähte oder Seile
- 124: erste Gelenkseite/erstes Gelenkelement mit Kugelpfanne
- 125: zweite Gelenkseite/zweites Gelenkelement mit Kugelkopf
- 126: Balg (elastisch)
- 127: Anbindung an Gehäuse des Antriebs
- 128: Gehäuse des Antriebs
- 129: Angetriebene Achse
- 130: Spannvorrichtung
- 131: obere Anbindungsplatte, erstes Gelenkelement
- 132: untere Anbindungsplatte, zweites Gelenkelement
- 133: Verschraubung
- 134: erstes Scheibenelement
- 135: zweites Scheibenelement
- 136: drittes Scheibenelement
- 137: Verbindungsstift
- 138: Achse
- 139: Gelenkmittelpunkt im unverschobenen Zustand
- 140: Gegenhalter
- 141: erstes Kreisausschnittelement
- 142: zweites Kreisausschnittelement
- 143: drittes Kreisausschnittelement
- 144: viertes Kreisausschnittelement
- 145: translatorische Verschiebung der Gelenkachse bei externen Lasten/Kräften
- 146: Feder
- 147: innerer Kreisring
- 148: äußerer Kreisring

## Patentansprüche

1. Gelenkvorrichtung für ein Exoskelett zur technischen Realisierung komplexer rotatorischer Bewegungen, aufweisend:
ein erstes Gelenkelement (101);
ein zweites Gelenkelement (102); und
eine Dämpfungseinrichtung (105);
wobei das erste Gelenkelement und das zweite Gelenkelement eine gemeinsame Kopplung aufweisen,
wobei die Kopplung wenigstens einen ersten rotatorischen Freiheitsgrad und einen translatorischen Freiheitsgrad aufweist,
wobei die Dämpfungseinrichtung (105) derart zwischen dem ersten Gelenkelement (101) und dem zweiten Gelenkelement (102) angeordnet ist, dass es den translatorischen Freiheitsgrad stärker dämpft als den rotatorischen Freiheitsgrad,
wobei das erste Gelenkelement (101) eine Gelenkkapsel mit einer nach innen gerichteten Kopplungsfläche aufweist und das zweite Gelenkelement (102) eine nach außen gerichtete Kopplungsfläche aufweist,
wobei die nach außen gerichtete Kopplungsfläche des zweiten Gelenkelementes (102) innerhalb der Gelenkkapsel des ersten Gelenkelementes (101) liegt,
wobei wenigstens ein Teil der Dämpfungseinrichtung (105) zwischen der nach innen gerichteten Kopplungsfläche des ersten Gelenkelements (101) und der nach außen gerichteten Kopplungsfläche des zweiten Gelenkelementes (102) angeordnet ist
**dadurch gekennzeichnet, dass**
das zweite Gelenkelement (102) eine Gelenkkapsel mit der nach außen gerichteten Kopplungsfläche aufweist,
wobei die Gelenkkapsel des ersten Gelenkelementes und die Gelenkkapsel des zweiten Gelenkelementes konzentrisch zueinander angeordnet sind und durch die Dämpfungseinrichtung (105) allseitig zueinander beabstandet sind,
wobei die Dämpfungseinrichtung einen zweiten rotatorischen Freiheitsgrad und einen dritten rotatorischen Freiheitsgrad, sowie den ersten translatorischen Freiheitsgrad und einen zweiten translatorischen Freiheitsgrad und einen dritten translatorischen Freiheitsgrad dämpft.

2. Gelenkvorrichtung gemäß Anspruch 1,
wobei die Gelenkkapsel des zweiten Gelenkelements (102) eine nach innen gerichtete Kopplungsfläche aufweist,

3. Gelenkvorrichtung gemäß einem der Ansprüche 1 und 2, ferner aufweisend:
einen Achskörper (103);
wobei die Gelenkkapsel des ersten Gelenkelementes (101) eine Achsbohrung aufweist, wobei die nach außen gerichtete Kopplungsfläche eine Achsdurchdringung aufweist,
wobei sich der Achskörper durch die Achsbohrung der Gelenkkapsel des ersten Gelenkelementes und durch die Achsdurchdringung der nach außen gerichteten Kopplungsfläche des zweiten Gelenkelementes (102) erstreckt,
wobei wenigstens ein Teil der Dämpfungseinrichtung (105) zwischen dem Achskörper und wenigstens einem von der Achsbohrung und der Achsdurchdringung angeordnet ist,
wobei der Achskörper eine Rotationachse des ersten rotatorischen Freiheitsgrades bildet und der erste translatorische Freiheitsgrad im Wesentlichen orthogonal zu der Rotationsachse des ersten rotatorischen Freiheitgrades ist.

4. Gelenkvorrichtung gemäß Anspruch 3,
wobei das zweite Gelenkelement (102) eine Gelenkkapsel mit einer die Achsdurchdringung fortsetzenden Achsbohrung aufweist mit der nach außen gerichteten Kopplungsfläche des zweiten Gelenkelementes (102) und einer nach innen gerichteten Kopplungsfläche,
wobei sich der Achskörper (103) durch die Achsbohrung der Gelenkkapsel des ersten Gelenkelementes und durch die Achsbohrung der Gelenkkapsel des zweiten Gelenkelementes (102) erstreckt,
wobei der Achskörper einen sich vom Achskörper weg erstreckenden Lagerkörper (104) aufweist, wobei der Lagerkörper in der Gelenkkapsel des zweiten Gelenkelements (102) angeordnet ist,
wobei wenigstens ein Teil der Dämpfungseinrichtung (105) zwischen der nach innen gerichteten Kopplungsfläche des zweiten Gelenkelementes und dem Lagerkörper (104) angeordnet ist,
wobei die Gelenkkapsel des ersten Gelenkelementes, die Gelenkkapsel des zweiten Gelenkelementes und der Lagerkörper (104) insbesondere konzentrisch zueinander angeordnet sind und durch die Dämpfungseinrichtung (105) allseitig zueinander beabstandet sind, und die Dämpfungseinrichtung einen zweiten rotatorischen Freiheitsgrad und einen dritten rotatorischen Freiheitsgrad, sowie den ersten translatorischen Freiheitsgrad und einen zweiten translatorischen Freiheitsgrad und einen dritten translatorischen Freiheitsgrad dämpft.

5. Gelenkvorrichtung gemäß einem der Ansprüche 3 oder 4,
wobei der Achskörper (103) eine Anordnung von in axialer Richtung seriell angeordneten Abschnitten (121, 122) unterschiedlicher Elastizität aufweist.

6. Gelenkvorrichtung gemäß einem der Ansprüche 1 bis 5, ferner eine Antriebseinheit (106, 107) aufweisend,
wobei die Antriebseinheit ausgelegt ist eine Rotationsbewegung des ersten Gelenkelementes (101) in Bezug auf das zweite Gelenkelement (102) entlang des ersten rotatorischen Freiheitgrades zu bewirken.

7. Gelenkvorrichtung gemäß einem der Ansprüche 3 bis 5, oder gemäß Anspruch 6 in Abhängigkeit von einem der Ansprüche 3 bis 5,
wobei der Achskörper (103) rohrförmig ausgestaltet ist und im Inneren ein draht- bzw. seilförmiges Element (123) zur Anpassung der Steifigkeits- und Dämpfungseigenschaften aufweist,
wobei das draht- bzw. seilförmige Element (123) insbesondere als Formgedächtniselement ausgestaltet ist, um sich Ausgangspositionen zu merken und diese gesteuert bzw. positions- und belastungsgesteuert wieder einzunehmen.

8. Gelenkvorrichtung gemäß Anspruch 6, oder gemäß Anspruch 7 in Abhängigkeit von Anspruch 6, ferner mit einer Sensoranordnung (108) zur Erfassung wenigstens eines der Parameter Position des ersten Gelenkelementes (101) zu dem zweiten Gelenkelement (102) und Kraftwirkung zwischen dem ersten Gelenkelement und dem zweiten Gelenkelement, und einer Steuerungsvorrichtung,
wobei die Steuerungsvorrichtung ausgelegt ist die Antriebseinheit auf der Grundlage der erfassten Parameter zu steuern.

9. Gelenkvorrichtung gemäß einem der Ansprüche 1 bis 8,
wobei die Dämpfungseinrichtung (105) ein fluidisches, insbesondere ein Hydraulik- bzw. Pneumatik-Kammersystem, und/oder ein elastisches Material zur Herstellung einer Dämpfungseigenschaft aufweist,
wobei die Dämpfungseinrichtung (105) insbesondere eine anisotropische elastische Struktur aufweist, die eine unterschiedliche Dämpfungscharakteristik in unterschiedlichen Freiheitsgraden, insbesondere in unterschiedlichen translatorischen Freiheitsgraden aufweist,
wobei die Dämpfungseinrichtung (105) insbesondere unterschiedliche Bereiche unterschiedlicher Elastizität aufweist, insbesondere unterschiedliche im Wesentlichen rotationssymmetrische Bereiche mit unterschiedlicher Elastizität,
wobei die Dämpfungseinrichtung (105) insbesondere gegenüber wenigstens einem von dem ersten Gelenkelement (101) und dem zweiten Gelenkelement (102) beweglich angeordnet ist, insbesondere in Bezug auf den ersten rotatorischen Freiheitsgrad.

10. Gelenkvorrichtung gemäß einem der Ansprüche 1 bis 9,
wobei das Dämpfungselement eine definiert nachgiebige Funktionsfläche oder eine kompressible Flüssigkeit oder ein kompressibles gasförmiges oder vergleichbares Medium aufweist,
wobei die Dämpfungseinrichtung (105) ausgelegt ist gezielte Bewegungen parallel geschalteter kinematischer Ketten auszuführen ohne das Bewegungsmuster im Wesentlichen zu beeinträchtigen, und/oder Steifigkeits- und Dämpfungseigenschaften der Dämpfungseinrichtung richtungsabhängig sind, durch Verwendung verschiedener Materialien und/oder Flüssigkeiten und/oder Medien und/oder unterschiedlichen Formen von Dämpfungsabschnitten.

11. Gelenkvorrichtung gemäß einem der Ansprüche 1 bis 10,
wobei die Dämpfungseinrichtung (105) ein aktives Element aufweist zur gezielten Einstellung der Dämpfungseigenschaften,
wobei die Gelenkvorrichtung insbesondere Sensoren aufweist zur Erfassung von belastungsabhängigen und/oder positionsabhängigen und/oder winkelabhängigen und/oder geschwindigkeitsabhängigen Parametern der Steifigkeits- und Dämpfungseigenschaften,
wobei das aktive Element auf der Grundlage der erfassten Parameter steuerbar ist.

12. Gelenkvorrichtung gemäß einem der Ansprüche 1 bis 11,
wobei die Gelenkvorrichtung gestaltet ist, dass sie zumindest eine Steuerungsmöglichkeit in Form zumindest eines Schalters zur Zustimmung zur Änderung der Steifigkeits- und Dämpfungseigenschaften oder zumindest eines Sensors, der Daten zur Belastung oder zur Position bzw. Winkelstellung liefert, die in der Steuerung verarbeitet werden, um Steifigkeits- und Dämpfungseigenschaften entsprechend zu steuern, beinhaltet, und/oder
die Dämpfungseinrichtung (105) eine Anbindung an eine Aktuatorik aufweist, die Stellkräfte für gezielte Stellbewegungen ermöglicht.

13. Gelenkvorrichtung gemäß einem der Ansprüche 1 bis 12,
wobei wenigstens ein Referenzierungselement zum Festlegen einer definierten Position zwischen der Gelenkvorrichtung zu einer parallelen kinematischen Kette vorliegt,
wobei wenigstens ein Arretierungs- und Kopplungselement zum Befestigen der Gelenkvorrichtung, oder zumindest eines Gelenkelementes der Gelenkvorrichtung, an zumindest einer weiteren technischen Komponente zum Aufbau eines Systems vorliegt, zur Realisierung einer Übertragung von zumindest Kräften in eine Raumrichtung bzw. zur Übertragung zumindest eines Moments in eine Richtung, und/oder
die komplexe Bewegung vorzugsweise mit einer translatorischen Verschiebung des Momentanpols in zumindest eine Raumrichtung als auch einer Winkeländerung/Verdrehung der Drehachse in zumindest einer Raumrichtung überlagert ist.

14. Gelenksystem, welches eine modulare Architektur aufweist und sich gezielt aus den Gelenkvorrichtungen (100) nach einem der Ansprüche 1 bis 13 aufbauen und bei Änderung der Anforderungen auch umbauen lässt.

15. Exoskelett mit wenigstens einer Gelenkvorrichtung (100) gemäß einem der Ansprüche 1 bis 13, wobei die Gelenkvorrichtung derart ausgestaltet ist, dass sie eine Trajektoriencharakteristik eines Gelenkes eines Lebewesens, insbesondere eines Menschen, durch die an entsprechender Stelle am Exoskelett vorgesehene Gelenkvorrichtung gemäß einem der Ansprüche 1 bis 13 nachbildet.

## Claims

1. Articulation device for an exoskeleton for the technical realization of complex rotatory movements, comprising:
a first articulation element (101);
a second articulation element (102); and
a damping device (105);
wherein the first articulation element and the second articulation element have a common coupling,
wherein the coupling has at least a first rotational degree of freedom and a translational degree of freedom,
wherein the damping device (105) is arranged between the first articulation element (101) and the second articulation element (102) in such a way that it damps the translational degree of freedom more than the rotational degree of freedom,
wherein the first articulation element (101) comprises an articular capsule with an inwardly directed coupling surface and the second articulation element (102) comprises an outwardly directed coupling surface,
wherein the outwardly directed coupling surface of the second articulation element (102) lies within the articular capsule of the first articulation element (101),
wherein at least a part of the damping device (105) is arranged between the inwardly directed coupling surface of the first articulation element (101) and the outwardly directed coupling surface of the second articulation element (102)
**characterized in that**
the second articulation element (102) comprises an articular capsule with the outwardly directed coupling surface,
wherein the articular capsule of the first articulation element and the articular capsule of the second articulation element are arranged concentrically to one another and are spaced apart from one another on all sides by the damping device (105),
wherein the damping device damps a second rotational degree of freedom and a third rotational degree of freedom, as well as the first translational degree of freedom and a second translational degree of freedom and a third translational degree of freedom.

2. Articulation device according to claim 1,
wherein the articular capsule of the second articulation element (102) comprises an inwardly directed coupling surface.

3. Articulation device according to any one of claims 1 and 2, further comprising:
an axle body (103);
wherein the articular capsule of the first articulation element (101) comprises an axle bore, wherein the outwardly directed coupling surface comprises an axle penetration,
wherein the axle body extends through the axle bore of the articular capsule of the first articulation element and through the axle penetration of the outwardly directed coupling surface of the second articulation element (102),
wherein at least a part of the damping device (105) is arranged between the axle body and at least one of the axle bore and the axle penetration,
wherein the axis body forms an axis of rotation of the first rotational degree of freedom and the first translational degree of freedom is substantially orthogonal to the axis of rotation of the first rotational degree of freedom.

4. Articulation device according to claim 3,
wherein the second articulation element (102) comprises an articular capsule with an axle bore continuing the axle penetration with the outwardly directed coupling surface of the second articulation element (102) and an inwardly directed coupling surface,
wherein the axle body (103) extends through the axle bore of the articular capsule of the first articulation element and through the axle bore of the articular capsule of the second articulation element (102),
wherein the axle body comprises a bearing body (104) extending away from the axle body, the bearing body being arranged in the articular capsule of the second articulation element (102),
wherein at least a part of the damping device (105) is arranged between the inwardly directed coupling surface of the second articulation element and the bearing body (104),
wherein the articular capsule of the first articulation element, the articular capsule of the second articulation element and the bearing body (104) are arranged in particular concentrically to one another and are spaced apart from one another on all sides by the damping device (105), and the damping device damps a second rotational degree of freedom and a third rotational degree of freedom, as well as the first translational degree of freedom and a second translational degree of freedom and a third translational degree of freedom.

5. Articulation device according to any one of claims 3 or 4,
wherein the axle body (103) comprises an arrangement of sections (121, 122) of different elasticity arranged in series in the axial direction.

6. Articulation device according to any one of claims 1 to 5, further comprising a drive unit (106, 107),
wherein the drive unit is designed to effect a rotational movement of the first articulation element (101) in relation to the second articulation element (102) along the first rotational degree of freedom.

7. Articulation device according to any one of claims 3 to 5 or according to claim 6 depending on any one of claims 3 to 5,
wherein the axle body (103) is tubular in shape and comprises a wire- or rope-shaped element (123) in the interior for adapting the stiffness and damping properties,
wherein the wire- or rope-shaped element (123) is designed in particular as a shape memory element in order to memorize initial positions and to resume them in a controlled manner or in a position- and load-controlled manner.

8. Articulation device according to claim 6, or according to claim 7 depending on claim 6, further comprising a sensor arrangement (108) for detecting at least one of the parameters position of the first articulation element (101) relative to the second articulation element (102) and force effect between the first articulation element and the second articulation element, and a control device,
whereby the control device is designed to control the drive unit on the basis of the recorded parameters.

9. Articulation device according to any one of claims 1 to 8,
wherein the damping device (105) comprises a fluidic, in particular a hydraulic or pneumatic chamber system, and/or an elastic material for producing a damping property,
wherein the damping device (105) comprises, in particular, an anisotropic elastic structure which has a different damping characteristic in different degrees of freedom, in particular in different translational degrees of freedom,
wherein the damping device (105) comprises, in particular, different regions of different elasticity, in particular different substantially rotationally symmetrical regions with different elasticity,
wherein the damping device (105) is arranged movably, in particular with respect to at least one of the first articulation element (101) and the second articulation element (102), in particular with respect to the first rotational degree of freedom.

10. Articulation device according to any one of claims 1 to 9,
wherein the damping element comprises a defined compliant functional surface or a compressible liquid or a compressible gaseous or comparable medium,
wherein the damping device (105) is designed to carry out targeted movements of kinematic chains connected in parallel without substantially impairing the movement pattern, and/or
stiffness and damping properties of the damping device are direction-dependent, by using different materials and/or fluids and/or media and/or different shapes of damping sections.

11. Articulation device according to any one of claims 1 to 10,
wherein the damping device (105) comprises an active element for selectively adjusting the damping properties,
wherein the articulation device comprises, in particular, sensors for detecting load-dependent and/or position-dependent and/or angle-dependent and/or speed-dependent parameters of the stiffness and damping properties,
wherein the active element can be controlled on the basis of the recorded parameters.

12. Articulation device according to any one of claims 1 to 11,
wherein the articulation device is designed to include at least one control facility in the form of at least one switch for agreeing to change the stiffness and damping characteristics or at least one sensor providing load or position or angular position data which is processed in the controller to control stiffness and damping characteristics accordingly, and/or
the damping device (105) has a connection to an actuator system that enables actuating forces for targeted actuating movements.

13. Articulation device according to any one of claims 1 to 12,
wherein at least one referencing element is present for establishing a defined position between the articulation device and a parallel kinematic chain,
wherein at least one locking and coupling element is present for fastening the articulation device, or at least one articulation element of the articulation device, to at least one further technical component for constructing a system, for realizing a transmission of at least forces in a spatial direction or for transmitting at least one moment in a direction, and/or
the complex movement is preferably superimposed with a translational displacement of the torque pole in at least one spatial direction and an angular change/rotation of the axis of rotation in at least one spatial direction.

14. Articulation system, which comprises a modular architecture and can be specifically constructed from the articulation devices (100) according to any one of claims 1 to 13 and can also be converted if the requirements change.

15. Exoskeleton with at least one articulation device (100) according to one of claims 1 to 13, wherein the articulation device is designed in such a way that it reproduces a trajectory characteristic of a articulation of a living being, in particular a human being, by means of the articulation device provided at a corresponding position on the exoskeleton according to one of claims 1 to 13.

## Revendications

1. Dispositif d'articulation pour un exosquelette pour la réalisation technique de mouvements de rotation complexes, comportant :
un premier élément d'articulation (101) ;
un second élément d'articulation (102) ; et
un dispositif d'amortissement (105) ;
dans lequel le premier élément d'articulation et le second élément d'articulation ont un couplage commun,
dans lequel le couplage présente au moins un premier degré de liberté en rotation et un degré de liberté en translation, dans lequel le dispositif d'amortissement (105) est agencé entre le premier élément d'articulation (101) et le second élément d'articulation (102) de telle sorte qu'il amortit plus le degré de liberté en translation que le degré de liberté en rotation,
dans lequel le premier élément d'articulation (101) comporte une capsule d'articulation avec une face de couplage dirigée vers l'intérieur et le second élément d'articulation (102) comporte une face de couplage dirigée vers l'extérieur,
dans lequel la face de couplage dirigée vers l'extérieur du second élément d'articulation (102) est à l'intérieur de la capsule d'articulation du premier élément d'articulation (101),
dans lequel au moins une partie du dispositif d'amortissement (105) est agencée entre la face de couplage dirigée vers l'intérieur du premier élément d'articulation (101) et la face de couplage dirigée vers l'extérieur du second élément d'articulation (102),
**caractérisé en ce que**
le second élément d'articulation (102) comporte une capsule d'articulation avec la face de couplage dirigée vers l'extérieur,
dans lequel la capsule d'articulation du premier élément d'articulation et la capsule d'articulation du second élément d'articulation sont agencées de manière concentrique l'une par rapport à l'autre et sont espacées l'une de l'autre de tous côtés par le dispositif d'amortissement (105),
dans lequel le dispositif d'amortissement amortit un deuxième degré de liberté en rotation et un troisième degré de liberté en rotation, ainsi que le premier degré de liberté en translation et un deuxième degré de liberté en translation et un troisième degré de liberté en translation.

2. Dispositif d'articulation selon la revendication 1,
dans lequel la capsule d'articulation du second élément d'articulation (102) comporte une face de couplage dirigée vers l'intérieur.

3. Dispositif d'articulation selon l'une des revendications 1 et 2, comportant en outre :
un corps axial (103) ;
dans lequel la capsule d'articulation du premier élément d'articulation (101) comporte un trou axial, dans lequel la face de couplage dirigée vers l'extérieur comporte un passage axial,
dans lequel le corps axial s'étend à travers le trou axial de la capsule d'articulation du premier élément d'articulation et à travers le passage axial de la face de couplage dirigée vers l'extérieur du second élément d'articulation (102),
dans lequel au moins une partie du dispositif d'amortissement (105) est agencée entre le corps axial et au moins un élément parmi le trou axial et le passage axial, dans lequel le corps axial forme un axe de rotation du premier degré de liberté en rotation et le premier degré de liberté en translation est sensiblement orthogonal à l'axe de rotation du premier degré de liberté en rotation.

4. Dispositif d'articulation selon la revendication 3,
dans lequel le second élément d'articulation (102) comporte une capsule d'articulation avec un trou axial dans le prolongement du passage axial, avec la face de couplage dirigée vers l'extérieur du second élément d'articulation (102) et une face de couplage dirigée vers l'intérieur, dans lequel le corps axial (103) s'étend à travers le trou axial de la capsule d'articulation du premier élément d'articulation et à travers le trou axial de la capsule d'articulation du second élément d'articulation (102), dans lequel le corps axial comporte un corps de palier (104) s'étendant en s'éloignant du corps axial, dans lequel le corps de palier est agencé dans la capsule d'articulation du second élément d'articulation (102),
dans lequel au moins une partie du dispositif d'amortissement (105) est agencée entre la face de couplage dirigée vers l'intérieur du second élément d'articulation et le corps de palier (104),
dans lequel la capsule d'articulation du premier élément d'articulation, la capsule d'articulation du second élément d'articulation et le corps de palier (104) sont agencés en particulier de manière concentrique les uns par rapport aux autres et sont espacés les uns des autres de tous côtés par le dispositif d'amortissement (105), et le dispositif d'amortissement amortit un deuxième degré de liberté en rotation et un troisième degré de liberté en rotation, ainsi que le premier degré de liberté en translation et un deuxième degré de liberté en translation et un troisième degré de liberté en translation.

5. Dispositif d'articulation selon l'une des revendications 3 ou 4,
dans lequel le corps axial (103) comporte un ensemble de parties (121, 122) d'élasticité différente, agencées en série dans une direction axiale.

6. Dispositif d'articulation selon l'une des revendications 1 à 5, comportant en outre une unité d'entraînement (106, 107),
dans lequel l'unité d'entraînement est conçue pour entraîner un mouvement de rotation du premier élément d'articulation (101) par rapport au second élément d'articulation (102) le long du premier degré de liberté en rotation.

7. Dispositif d'articulation selon l'une des revendications 3 à 5, ou selon la revendication 6 lorsque dépendante de l'une des revendications 3 à 5,
dans lequel le corps axial (103) est configuré de manière tubulaire et comporte à l'intérieur un élément en forme de fil ou de câble (123) pour adapter les propriétés de rigidité et d'amortissement,
dans lequel l'élément en forme de fil ou de câble (123) est en particulier configuré comme un élément à mémoire de forme afin de mémoriser des positions de départ et de commander celles-ci ou de les reprendre de manière commandée en fonction de la position et de la charge.

8. Dispositif d'articulation selon la revendication 6, ou selon la revendication 7 lorsque dépendante de la revendication 6, présentant en outre un agencement de capteur (108) pour détecter au moins un des paramètres parmi une position du premier élément d'articulation (101) par rapport au second élément d'articulation (102), et l'action d'une force entre le premier élément d'articulation et le second élément d'articulation, ainsi qu'un dispositif de commande,
dans lequel le dispositif de commande est conçu pour commander l'unité d'entraînement sur la base des paramètres détectés.

9. Dispositif d'articulation selon l'une des revendications 1 à 8,
dans lequel le dispositif d'amortissement (105) comporte un système de chambre fluidique, en particulier un système de chambre hydraulique ou pneumatique, et/ou un matériau élastique pour générer une propriété d'amortissement, dans lequel le dispositif d'amortissement (105) comporte en particulier une structure élastique anisotrope qui présente une caractéristique d'amortissement différente dans différents degrés de liberté, en particulier dans différents degrés de liberté en translation,
dans lequel le dispositif d'amortissement (105) comporte en particulier différentes zones d'élasticité différente, en particulier différentes zones d'élasticité différente présentant pratiquement une symétrie de rotation,
dans lequel le dispositif d'amortissement (105) est agencé de manière mobile en particulier par rapport à au moins un élément parmi le premier élément d'articulation (101) et le second élément d'articulation (102), en particulier par rapport au premier degré de liberté en rotation.

10. Dispositif d'articulation selon l'une des revendications 1 à 9,
dans lequel l'élément d'amortissement comporte une face fonctionnelle souple définie ou un fluide compressible ou un milieu gazeux compressible ou analogue,
dans lequel le dispositif d'amortissement (105) est conçu pour réaliser des mouvements sélectifs de chaînes cinématiques en parallèle sans pratiquement restreindre le modèle de mouvement, et/ou
les propriétés de rigidité et d'amortissement du dispositif d'amortissement sont dépendantes de la direction, par l'utilisation de différents matériaux et/ou fluides et/ou milieux et/ou différentes formes de parties d'amortissement.

11. Dispositif d'articulation selon l'une des revendications 1 à 10,
dans lequel le dispositif d'amortissement (105) comporte un élément actif pour le réglage sélectif des propriétés d'amortissement,
dans lequel le dispositif d'articulation comporte en particulier des capteurs pour détecter des paramètres des propriétés de rigidité et d'amortissement en fonction de la charge et/ou de la position et/ou de l'angle et/ou de la vitesse,
dans lequel l'élément actif peut être commandé sur la base des paramètres détectés.

12. Dispositif d'articulation selon l'une des revendications 1 à 11,
dans lequel le dispositif d'articulation est formé de sorte qu'il fournit au moins une possibilité de commande sous la forme d'au moins un bouton pour autoriser la modification des propriétés de rigidité et d'amortissement, ou au moins un capteur contenant des données concernant la charge ou la position ou la position angulaire, qui sont traitées dans la commande afin de réaliser une commande en fonction des propriétés de rigidité ou d'amortissement, et/ou le dispositif d'amortissement (105) comporte une liaison avec un système d'actionnement qui permet d'obtenir des forces de réglage pour des mouvements de réglage ciblés.

13. Dispositif d'articulation selon l'une des revendications 1 à 12,
dans lequel il y a au moins un élément de référencement pour établir une position définie entre le dispositif d'articulation et une chaîne cinématique parallèle,
dans lequel il y a au moins un élément d'arrêt et de couplage pour fixer le dispositif d'articulation, ou il y a au moins un élément d'articulation du dispositif d'articulation, sur au moins un composant technique supplémentaire pour la construction d'un système, afin de réaliser au moins une transmission de forces dans une direction spatiale ou de transmettre au moins un couple dans une direction, et/ou
le mouvement complexe est de préférence superposé à un déplacement en translation du centre instantané de rotation dans au moins une direction spatiale également sous la forme d'un changement d'angle/d'une rotation de l'axe de rotation dans au moins une direction spatiale.

14. Système d'articulation présentant une architecture modulaire et pouvant être construit de manière sélective à partir des dispositifs d'articulation (100) selon l'une des revendications 1 à 13 et pouvant également être transformé en cas de variation des exigences.

15. Exosquelette présentant au moins un dispositif d'articulation (100) selon l'une des revendications 1 à 13, dans lequel le dispositif d'articulation est configuré de telle sorte qu'il reproduit une caractéristique de trajectoire d'une articulation d'un être vivant, en particulier d'un être humain, au moyen du dispositif d'articulation selon l'une des revendications 1 à 13 prévu à un emplacement correspondant sur l'exosquelette.
